# EUROPÄISCHE PATENTANMELDUNG

(11) **EP 2 708 935 A1**
(43) Veröffentlichungstag der Anmeldung: **19.03.2014**
(21) Anmeldenummer: 12184169.6
(22) Anmeldetag: 13.09.2012
(51) Int. Cl.: G02B 27/09, G02B 3/00

(54) **Strahltransformationselement, Vorrichtung zur Transformation von elektromagnetischer Strahlung, Verfahren zur Herstellung eines Strahltransformationselements und Verfahren zur Transformation einer elektromagnetischen Emission**

(71) Anmelder: FISBA OPTIK AG, 9016 St. Gallen (CH)
(72) Erfinder: Moser, Hansruedi, 9452 Hinterforst (CH); Forrer, Martin, 9008 St. Gallen (CH)
(74) Vertreter: Hepp Wenger Ryffel AG

(57) **Zusammenfassung**

Ein Strahltransformationselement 1 zum Transformieren von elektromagnetischer Strahlung, insbesondere Laserstrahlung, umfasst eine Einstrahlungsoberfläche 2 sowie eine Ausgangsstrahlungsoberfläche 6. Die Einstrahlungsoberfläche 2 umfasst mindestens 4 zylindrische Segmente 3, wobei jedes zylindrische Segment 3 mindestens zwei benachbarte Segmente aufweist. Eine jeweilige Zylinderlängsachse 4 eines ersten zylindrischen Segments 3 ist nicht parallel zu jeder jeweiligen Zylinderlängsachse 4 eines benachbarten zylindrischen Segments 3 ausgebildet.

## Beschreibung

Die Erfindung betrifft ein Strahltransformationselement, eine Vorrichtung zur optischen Strahltransformation, ein Verfahren zur Herstellung eines Strahltransformationselements sowie ein Verfahren zur Transformation einer elektromagnetischen Emission gemäss dem Oberbegriff der unabhängigen Ansprüche.

In den optischen Technologien, insbesondere der Laseroptik, ist die Verbesserung der Strahlqualität sowie die Erzielung einer grösstmöglichen Leistungsdichte ein immer wiederkehrendes Problem.

Aus der EP 0 961 152 ist eine Anordnung zum Drehen einzelner Laserdiodenemissionen bekannt, bei der die Drehung durch Prismen erreicht wird. Durch die Drehung der einzelnen Emissionen der Laserdioden wird die Fokussierbarkeit der Lichtemissionen verbessert. Die Herstellung der Anordnung und der Prismen ist jedoch aufwändig und teuer. Die nötige hochgenaue Montage der mikrooptischen Komponenten ist komplex und zeitintensiv.

Das Dokument EP 1 006 382 offenbart eine Anordnung sowie eine Vorrichtung zur optischen Strahltransformation. Die Vorrichtung besteht aus einem Array von Zylinderlinsensegmenten, die parallel zueinander 45° geneigt sind. Ein derartiges Zylinderlinsenelement weist Unstetigkeiten auf und ist daher schwer zu produzieren. Des Weiteren ist der maximale Strahldurchmesser durch die Zylinderbreite beschränkt.

Aus der US 7,260,131 ist eine Vorrichtung zur Symmetrisierung von Laserstrahlung aus einem Laserdiodensystem offenbart. Die Vorrichtung weist zylindrische Oberflächen auf, deren Zylinderachsen jeweils parallel zueinander sowie nebeneinander ausgerichtet sind. Dies führt zu Unstetigkeiten in der Oberfläche die eine Herstellung sehr teuer und sehr schwierig machen.

Aus der WO 2011/109763 ist ein System und ein Verfahren zum Umordnen und Drehen eines Lichtstrahls bekannt. Hierbei werden die einzelnen Emissionen einer Laserdiode zunächst um 90° gedreht und darauf folgend zu einem Gesamtstrahl umgeordnet. Hierbei müssen also die Anzahl und die Abstände der einzelnen Laserdioden auf die einzelnen Rotationselemente angepasst werden. Dies macht das Verfahren teuer und kompliziert.

Es ist daher Aufgabe der Erfindung die Nachteile des Standes der Technik zu vermeiden und insbesondere einen Strahltransformationselement, eine Vorrichtung zur optischen Strahltransformation, ein Verfahren zur Herstellung eines Strahltransformationselements sowie ein Verfahren zur Transformation einer elektromagnetischen Emission zu schaffen, die leicht herzustellen sind und dennoch eine möglichst effektive und verlustarme Strahltransformation ermöglichen.

Die Aufgabe wird gelöst durch ein Strahltransformationselement, einer Vorrichtung zur optischen Strahltransformation gemäss, ein Verfahren zur Herstellung eines Strahltransformationselement sowie einem Verfahren zur Transformation einer elektromagnetischer Emission gemäss den unabhängigen Ansprüchen.

Zur Lösung der oben angegebenen Aufgabe führt ein Strahltransformationselement zum Transformieren von elektromagnetischer Strahlung, insbesondere Laserstrahlung. Das Strahltransformationselement umfasst eine Einstrahlungsoberfläche und eine Ausgangsstrahlungsoberfläche, wobei die Einstrahlungsoberfläche mindestens vier Zylindersegmente umfasst. Jedes Zylindersegment weist mindestens zwei benachbarte Segmente auf. Eine jeweilige Zylinderlängsachse eines ersten zylindrischen Segments ist nicht parallel zur jeder jeweiligen Zylinderlängsachse eines benachbarten Zylindersegments ausgebildet.

Ein Zylindersegment ist ein Teil einer Oberfläche, die die Form eines Zylinders oder eines Zylinderabschnitts aufweist. Ein Zylindersegment kann hierbei stetig in ein zweites Zylindersegment übergehen. Stetig im Sinne der Anmeldung bedeutet ohne Stufen oder Absätze oder Sprünge.

Eine Zylinderlängsachse im Sinne der Anmeldung entspricht der Rotationsachse des Zylinders, wobei die Zylinderlängsachse um den Radius des Zylinders an die Oberfläche des Zylinders verschoben ist.

Ein Zylinder im Sinne der Anmeldung umfasst asphärische und sphärische Zylinder.

Die Zylindersegmente sind bevorzugt konvex ausgebildet.

Ein benachbartes Segment im Sinne der Anmeldung ist ein Segment, welches eine gemeinsame Kontaktlinie mit dem benachbarten Segment aufweist. Ein benachbartes Segment weist somit nicht nur einen punktförmigen Kontakt zum nächsten Segment auf.

Ein derartiges Strahltransformationselement führt zu einer optimalen Nutzung der Oberfläche der zylindrischen Elemente und somit zu einer verbesserten optischen Leistungsdichte. Es kann somit ein grösserer Strahl durch das zylindrische Element hindurchkommen, so dass in einem Array eine bessere Füllung erzielt wird. In der Fast-Axis wird eine bessere Kollimation erreicht, wodurch der Strahl besser fokussiert werden kann, welches zu einer höheren Leistungsdichte führt.

Das Strahltransformationselement kann eine Längsachse aufweisen und die Zylinderlängsachsen können jeweils 45° zur Längsachse des Strahltransformationselements geneigt sein.

Die Längsachse des Strahltransformationselements im Sinne der Anmeldung entspricht der Seite der Auflagefläche des Strahltransformationselements während der Benutzung.

Durch eine 45° Neigung der Zylinderlängsachsen lässt sich eine Spiegelung der eintreffenden Strahlung an der Zylinderlängsachse erzielen. Es sind selbstverständlich weiterhin andere Winkel zwischen der Längsachse des Strahltransformationselements und der Zylinderlängsachse denkbar.

Eine derartige Spiegelung ist insbesondere bei asymmetrischer Strahlung wie beispielsweise Laserdiodenstrahlung von Vorteil, da das Strahlparameterprodukt insbesondere in einem Array symmetrisiert wird. Die Strahlqualität der Fast-Axis eines Arrays wird verbessert, so dass der Strahl besser fokussierbar ist.

Die Ausgangsstrahlungsoberfläche kann spiegelsymmetrisch zur Einstrahlungsoberfläche geformt sein, wobei der maximale Abstand zwischen Einstrahlungsoberfläche und Ausgangsstrahlungsoberfläche bevorzugt dem Doppelten einer Brennweite der Zylindersegmente beträgt. Somit liegt der Brennpunkt eines Zylindersegments der Einstrahlungsoberfläche auf dem Brennpunkt des gegenüber angeordneten Zylindersegments der Ausgangsstrahlungsoberfläche. Eine spiegelsymmetrische Ausgestaltung des Strahltransformationselements, bei der der maximale Abstand dem Doppelten der Brennweite des Zylindersegments entspricht, führt dazu, dass die Strahlen nicht fokussiert oder divergiert werden. Die Strahltransformation findet somit ausschliesslich innerhalb des Strahls statt. Für den Fall einer bezüglich eines eintreffenden Lichtstrahls geneigten Zylinderlängsachse wird der Eingangsstrahl an dieser Achse gespiegelt.

Die Zylindersegmente können sphärisch oder asphärisch ausgebildet sein.

Eine sphärische Ausbildung führt zu günstigen Herstellkosten. Eine asphärische Ausgestaltung führt zu einer besseren optischen Abbildungsqualität und dadurch eine höhere Leistungsdichte, insbesondere bei der Fokussierung in eine Lichtleitfaser.

Das Strahltransformationselement kann Dimensionen von in der Höhe 0.5-4mm, in der Breite 1.5-20mm und in der Tiefe von 1-7mm aufweisen.

Das Strahltransformationselement ist aus einem für das jeweilige Laserlicht transparenten Material, insb. einem optischen Glas hergestellt.

Zur Lösung der oben angegebenen Aufgabe führt weiterhin eine Vorrichtung zur optischen Strahltransformation umfassend mindestens eine Laserlichtquelle sowie ein Strahltransformationselement wie vorhergehend beschrieben.

Das aus der Laserlichtquelle emittierte Licht wird durch das Strahlentransformationselement so transformiert, insbesondere gedreht, dass die gesamte Fläche des zylindrischen Segments zur Transformation verwendet werden kann. Es entstehen daher weniger Verluste. Des Weiteren ermöglicht dies einen grösseren Strahlquerschnitt nach der Kollimation, welches zu einer besseren Fokussierbarkeit führt.

Die Laserlichtquelle ist so angeordnet, dass das emittierte Licht im Wesentlichen senkrecht auf die Scheitelpunkte der Zylindersegmente der Einstrahlungsoberfläche auftrifft.

Die Laserlichtquelle kann einen Array aus Halbleiterlaserelemente umfassen, wobei ein Abstand zwischen den Halbleiterlaserelementen entweder der Länge eines Querschnitts parallel zur Längsachse des Strahltransformationselements von gemäss einem ersten Aspekt zwei zylindrischen Segmenten oder von gemäss einem zweiten Aspekt einem zylindrischen Segment oder von gemäss einem dritten Aspekt weniger als einem zylindrischen Segment entspricht.

Im ersten Aspekt trifft die nicht-rotationssymmetrische Lichtemission der Halbleiterlaserelemente so auf das Strahltransformationselement, dass die Mitte der Lichtemission (der Kreuzungspunkt zwischen den beiden Verbindungslinien der grössten Ausdehnung der Lichtemission in zwei Dimensionen) auf einen Kreuzungspunkt von zwei Zylinderlängsachsen ausgerichtet ist. Die Lichtemission, bestehend aus einzelnen Strahlflächenelementen, wird somit von vier einzelnen Zylindersegmenten transformiert. In den jeweiligen Zylindersegmenten werden die Strahlflächenelemente A, B, C, D jeweils an der Zylinderlängsachse des Zylinderelements gespiegelt, so das die Strahlflächenelemente A', B', C', D' entstehen. Die äussere Kontur des Strahls ist somit um 90° rotiert. Der Abstand der Halbleiterlaserelemente entspricht somit dem Abstand von zwei parallelen Zylinderlängsachsen.

Im zweiten Aspekt trifft die nicht-rotationssymmetrische Lichtemission der Halbleiterlaserelemente so auf das Strahltransformationselement, dass die Emission jeweils eines Halbleiterlaserelements genau auf ein Zylindersegment trifft. Pro Zylindersegment ist somit ein Halbleiterlaserelement ausgebildet. Die eintreffende Emission eines Halbleiterlaserelements wird jeweils an der Zylinderlängsachse des jeweiligen Zylindersegments gespiegelt, so dass die Kontur der Laseremission um 90° gedreht wird.

Im dritten Aspekt ist die Anordnung der zylindrischen Segmente auf dem Strahltransformationselement somit unabhängig von dem Abstand (pitch) der Halbleiterlaserelemente. Dies vereinfacht die Herstellung eines Strahltransformationselements sowie die Herstellung der Vorrichtung zur optischen Strahltransformation und führt zu günstigeren Produktions- und Betriebskosten.

Der Abstand (pitch) der Halbleiterlaserelemente im Sinne der Anmeldung ist der Abstand des Mittelpunkts eines ersten Halbleiterelements zum Mittelpunkt eines zweiten Halbleiterelements.

Der Vorteil der Ausführungsform gemäss dem ersten, zweiten und dem dritten Aspekt ist die Erzielung einer grösseren Leistungsdichte.

Die Vorrichtung kann die folgenden Elemente umfassen, die von den Emissionen der Laserlichtquellen durchlaufen werden:
- Eine erste Kollimierungsvorrichtung, um die Emissionen in der ersten Ebene zu kollimieren, wobei die erste Koordinierungsvorrichtung bevorzugt zwischen der Laserlichtquelle und dem Strahltransformationselement angeordnet ist;
- Eine zweite Kollimierungsvorrichtung, um die Emissionen in der zweiten Ebene zu koordinieren, wobei die zweite Kollimierungsvorrichtung bevorzugt in einer Ausbreitungsrichtung der Emission nach dem Strahltransformationselement angeordnet ist.

Die erste Kollimiervorrichtung führt zu einer Kollimierung in einer ersten Ebene, sodass stark divergierende Ebenen des Strahls, wie beispielsweise die Fast-axis, bereits kollimiert werden können, bevor sie stark divergiert sind. Dies führt zu einer verbesserten Strahlqualität. Die zweite Kollimierungsvorrichtung führt zu einem in zwei Ebenen kollimierten Strahl und reduziert somit die Divergenz des Gesamtstrahls. Dies führt zu einer besseren Strahlqualität.

Die Ausbreitungsrichtung der Emission ist im Sinne der Anmeldung definiert als Senkrechte auf der Fast-axis und der Slow-axis in einer Richtung, die sich von dem Halbleiterlaserelement entfernt.

In der Vorrichtung kann des weiteren eine Kombinationslinse zur Kombination der einzelnen Emissionen in einer ersten Dimension zu einem kombinierten Strahl, ein Dispersionselement zum Empfangen und Transmittieren des kombinierten Strahls, sowie optional ein teilweise reflektierendes Element, welches den kombinierten Strahl teilweise auskoppelt und teilweise zurück in die Mitte reflektiert ausgebildet sein.

Eine derartige Vorrichtung ermöglicht eine Erzeugung einer stabilen Laseremission und insbesondere die Kombination von Laserlicht verschiedener Wellenlängen der Halbleiterlaserelemente. Ein so kombinierter Strahl lässt sich ohne signifikante Leistungsverluste optimal in eine Lichtleitphase einkoppeln.

Zur Lösung der oben angegebenen Aufgabe führt weiterhin ein Verfahren zur Herstellung eines Strahltransformationselements wie vorhergehend beschrieben, umfassend die folgenden Schritte:
- Einbringen einer doppelzylindrischen Struktur in ein optisches Glas durch ein Abformungs-/Umformungsverfahren oder einen Lithographie-Prozess;
- Bevorzugt Heraustrennen eines Arrays aus dem optischen Glas, sodass die Zylinderlängsachse der Zylindersegmente im Wesentlichen einen 45° Winkel zur Längs- und Querseite des Arrays aufweisen.

Eine doppelzylindrische Struktur im Sinne der Anmeldung ist eine Struktur, die zwei zylindrische Formen aufweist, die gegeneinander um einen Winkel gedreht sind. Der bevorzugte Winkel beträgt 90°, jedoch sind auch andere Winkel denkbar.

Die Herstellung des Strahltransformationselements ist somit schnell und kostengünstig möglich. Des Weiteren ist die Qualität des hergestellten Strahltransformationselements optimal.

Zur Lösung der oben angegebenen Aufgabe führt weiterhin ein Verfahren zur Transformation einer elektromagnetischen Emission, insbesondere eines oder mehrere Laserstrahlen, umfassend ein Strahltransformationselement wie vorhergehend beschrieben. Eine Emission eines Emitters wird entweder durch ein- oder vier- oder mehr-zylindrische Segmente transformiert.

Ein derartiges Verfahren hat den Vorteil, dass ein Strahltransformationselement kostengünstig hergestellt werden kann, welches gleichzeitig die Leistungsdichte und Fokussierbarkeit der Laseremission optimiert. Des Weiteren ist es möglich, dass das Strahltransformationselement unabhängig von dem Abstand der einzelnen Emitter voneinander verwendet werden kann. Das Verfahren ist somit einfacher und kostengünstiger durchzuführen. Ein derart hergestelltes Strahltransformationselement weist des Weiteren die Vorteile des Strahltransformationselements wie vorhergehend beschrieben auf.

Die Emission kann so auf das Strahltransformationselement gegeben werden, dass wenn sie auf eine Zylinderlängsachse des mindestens einen Zylindersegments des Strahltransformationselements, die in einem Winkel von 45° zu einer Fast-axis der elektromagnetischen Emission angeordnet ist, trifft, eine Rotation der äusseren Kontur der Emission um 90° erzielt wird.

Eine derartige Anordnung führt zu einer Spiegelung an der Zylinderlängsachse und im Effekt somit zu einer Rotation der äusseren Form der elektromagnetischen Emission um 90°. Auf diese Weise kann das Strahlparameterprodukt symmetrisiert und somit die Strahlqualität verbessert werden.

Die Emissionen können zu einem kombinierten Strahl kombiniert werden, und an einem dispersiven Element dispergiert werden.

Der so erhältliche kombinierte Strahl hat eine höhere Strahlqualität und durch das dispersive Element werden die Emitter auf einem Array auf verschiedene Wellenlängen stabilisiert, wodurch der Strahl kombiniert und besser fokussiert werden kann. Somit wird die Leistungsdichte erhöht.

Der kombinierte Strahl kann teilweise zurück in die Kavität eines Lasers reflektiert werden.

Durch eine Reflektion kann die Emissionswellenlänge der einzelnen Emitter stabilisiert werden und die Wellenlängen der einzelnen Emitter werden schmalbandiger, so dass eine Überlagerung möglich wird.

Die Emissionen können in eine Lichtleitfaser eingekoppelt werden.

Durch die Einkopplung in eine Lichtleitfaser kann die Emission kontrolliert an einen bestimmten Ort geleitet werden und dort weiterverwendet werden.

Die Lichtleitfaser kann weiterhin laseraktive Medien enthalten, sodass die Emissionen auch zur Stimulierung einer weiteren Emission verwendet werden können.

Die Emissionen können in einer Richtung der Fast-Axis und in einer Richtung der Slow-Axis kollimiert werden, wobei die Kollimierung der Fast-Axis bevorzugt in einer Ausbreitungsrichtung der Emission betrachtet vor der Transformation in dem Strahlentransformationselement durchgeführt wird.

Eine derartige Vorgehensweise verbessert die Strahlqualität und führt daher zur besseren Bearbeitungsergebnissen durch den kombinierten Strahl.

Die Erfindung wird nachfolgend in Ausführungsbeispielen anhand von Figuren näher erläutert. Hierbei zeigt:
- Figur 1: Einen Ausschnitt einer Oberfläche eines Strahltransformationselements;
- Figur 2: Eine schematische Ansicht einer ersten Ausführungsform einer Vorrichtung zur Strahltransformation;
- Figur 3: Eine schematische Ansicht der nutzbaren Einstrahlungsoberfläche;
- Figur 4: Eine schematische Ansicht einer zweiten Ausführungsform einer Vorrichtung zur Strahltransformation;
- Figur 5: Eine schematische Ansicht einer dritten Ausführungsform einer Vorrichtung zur Strahltransformation;
- Figur 6: Eine seitliche Ansicht eines Werkzeuges zum Blankpressen;
- Figur 7: Eine seitliche Ansicht eines blank gepressten Rohlings;
- Figur 8: Eine schematische Ansicht eines Schnitts durch einen Rohling zur Herstellung eines Strahltransformationselements;
- Figur 9: Eine schematische Ansicht einer Vorrichtung zur Strahltransformation in einer bevorzugten Ausführungsform.

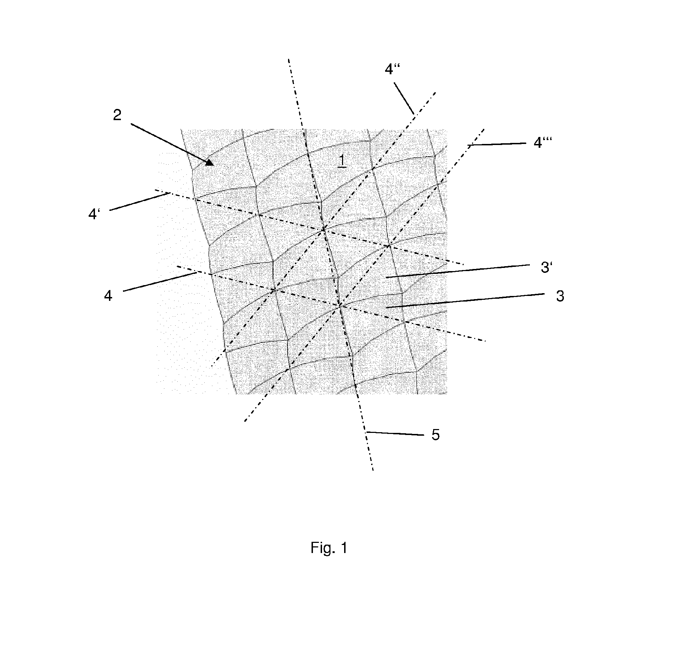

Figur 1 zeigt einen Ausschnitt einer Einstrahlungsoberfläche 2 eines Strahltransformationselements 1. Auf der Oberfläche sind Zylindersegmente ausgestaltet, die im 90° Winkel zueinander ausgerichtet sind. Jedes Zylindersegment 3, 3' weist eine Zylinderlängsachse 4, 4', 4" , 4"' auf. Die Zylinderlängsachsen 4, 4', 4", 4"' sind im 45° Winkel zur Längsachse 5 des Strahltransformationselements 1 ausgebildet. Durch die gekreuzte Anordnung der Zylinder, sind Zylindersegmente 3, 3' ausgebildet, die jeweils nur eine Krümmung aufweisen. Die jeweils benachbarten Zylindersegmente 3, 3' eines Zylindersegments 3, 3' weisen somit jeweils eine Zylinderlängsachse 4, 4' auf, die senkrecht auf der Zylinderlängsachse 4", 4"' des Zylindersegments 3, 3' steht. Die Übergänge zwischen den einzelnen Zylindersegmenten 3, 3' weisen keine Stufen oder Sprünge auf.

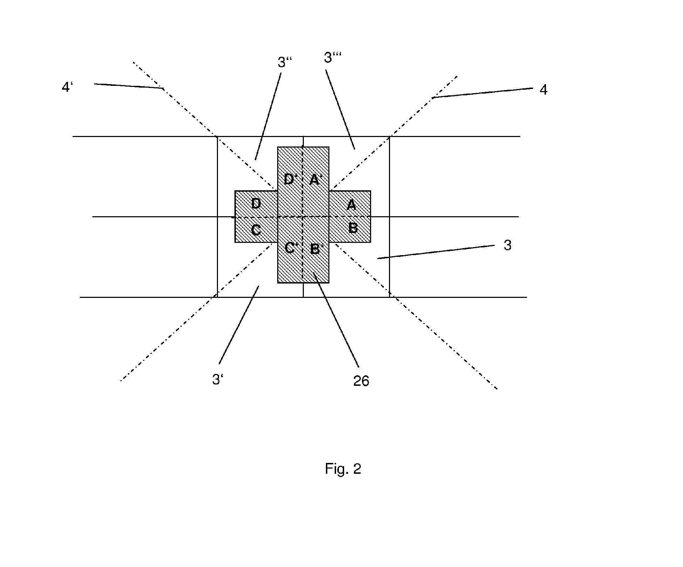

Figur 2 zeigt eine schematische Darstellung eines Auftreffens eines nicht rotations-symmetrischen Lichtstrahls 26 auf vier Zylindersegmente 3, 3', 3", 3"'. Die Zylindersegmente 3, 3', 3", 3"' weisen jeweils Zylinderlängsachsen 4 auf, wobei die jeweiligen Zylinderlängsachsen 4, 4' im 90° Winkel zueinander angeordnet sind. Eine einfallende Lichtemission bestehend aus den Strahlenflächenelementen A, B, C, D wird durch die Wölbung der einzelnen Zylindersegmente 3, 3', 3", 3"' jeweils segmentweise an der Zylinderlängsachse 4, 4' des Zylindersegments 3, 3', 3", 3"' gespiegelt. Somit entsteht ein transformierter Ausgangsstrahl mit den Strahlflächenelementen A', B', C', D'. Der Effekt der jeweiligen Spiegelung ist somit eine Rotation der äusseren Kontur der einfallenden Emission um 90°.

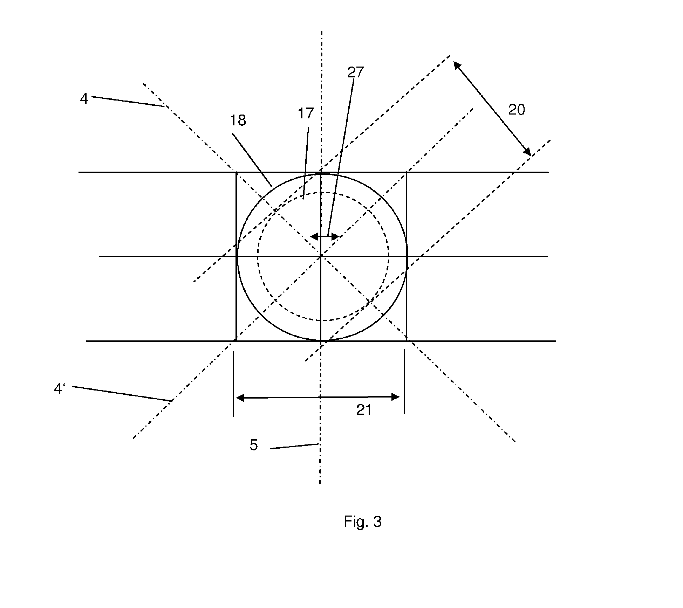

Figur 3 zeigt einen Vorteil der Anordnung aus Figur 2, in der die Zylinderlängsachsen 4, 4' im 90° Winkel 27 zueinander ausgebildet sind und jeweils im 45° Winkel zur Längsachse 5 des Strahltransformationselements 1. Im Stand der Technik war der verwendbare Strahldurchmesser 17 durch die Zylinderbreite 20 des jeweiligen Zylinders begrenzt. In der erfindungsgemässen Ausführungsform eines Strahltransformationselements 1 ist der nutzbare Bereich, der Strahldurchmesser 18, um den Faktor √2 grösser. Die nutzbare Breite 21 in der vorliegenden Erfindung umfasst die gesamte Oberfläche der Zylindersegmente 3. Somit kann ein grösserer Strahl das Strahltransformationselement 1 passieren, so dass in einem Array eine bessere Füllung erreicht wird. Eine bessere Füllung einer Arrays führt zu einer besseren Kollimation, wodurch eine bessere Fokussierung erzielt wird. Somit erreicht man eine höhere Leistungsdichte.

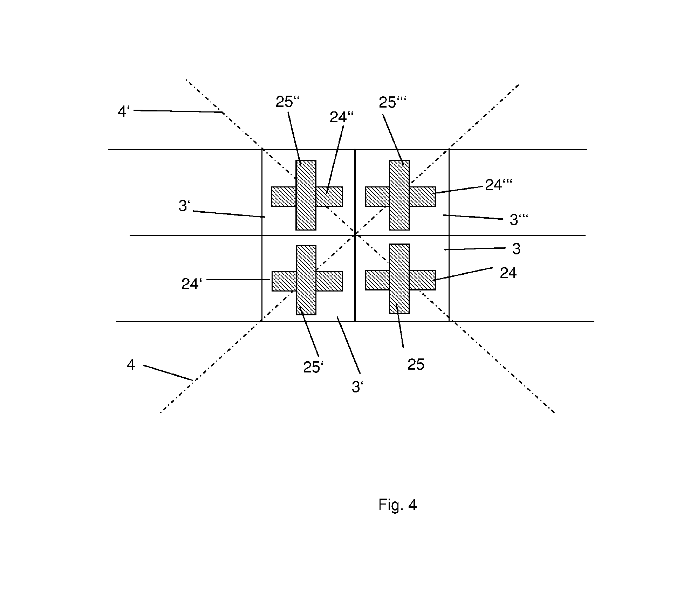

Figur 4 zeigt eine schematische Ansicht einer zweiten Ausführungsform, bei der pro Zylindersegment 3, 3', 3", 3"' jeweils ein nicht-rotationssymmetrischer eintreffender Strahl 24, 24', 24", 24"' auf das Strahltransformationselement 1 trifft. Die Zylinderlängsachsen 4, 4' sind analog zur Ausführungsform aus der Figur 3 in 90° Winkel zueinander angeordnet. Der jeweilige, auf dem Zylindersegment 3, 3', 3", 3"' auftreffende, Lichtstrahl 24, 24', 24", 24"' wird an der jeweiligen Zylinderlängsachse 4 gespiegelt. Es entsteht der ausgehende Lichtstrahl 25, 25', 25", 25"'. Im Endeffekt wird die äussere Form jeder Lichtemission um 90° gedreht. Die Verwendung eines Zweidimensionalen Arrays zur Lichtemission führt hierbei zu einer Erhöhung der Leistungsdichte und ermöglicht die Kombination von Laseremissionen in zwei Dimensionen.

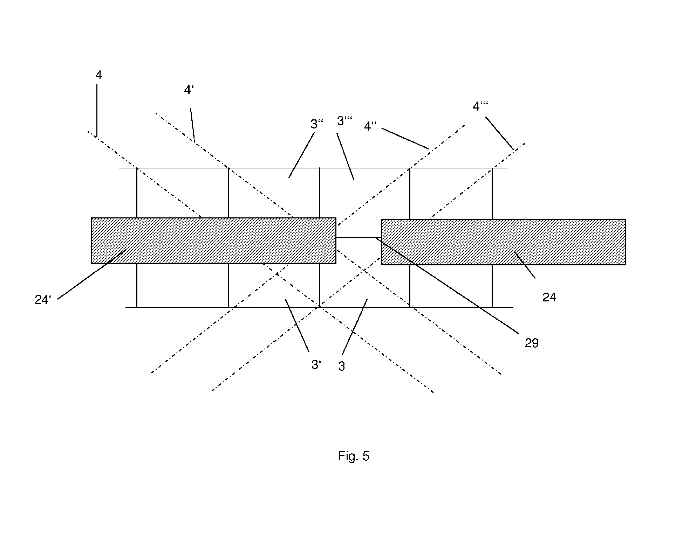

Figur 5 zeigt eine schematische Ansicht einer weiteren Ausführungsform der erfindungsgemässen Vorrichtung zur Strahltransformation. Das Strahltransformationselement 1 ist analog zu den Ausführungsbeispielen in Figur 3 und 4 ausgestaltet. Es weist somit Zylindersegmente 3, 3', 3", 3"' auf, die jeweils eine Zylinderlängsachse 4, 4', 4", 4"' aufweisen. Die Zylinderlängsachsen 4, 4', 4", 4"' sind senkrecht zueinander angeordnet. Der im jeweiligen Zylindersegment 3, 3', 3", 3"' auftreffende Lichtstrahl 24, 24' wird an dieser Zylinderlängsachse 4, 4', 4", 4"' gespiegelt (nicht dargestellt). Durch die gekreuzte Form der Zylinderlängsachsen 4, 4', 4", 4"' ist es somit möglich das Strahltransformationselement 1 unabhängig vom Abstand der einzelnen Emitter für die Lichtemissionen auszugestalten. Bevorzugt sind die Lichtemissionen entlang einer waagerechten mittleren Achse ausgerichtet.

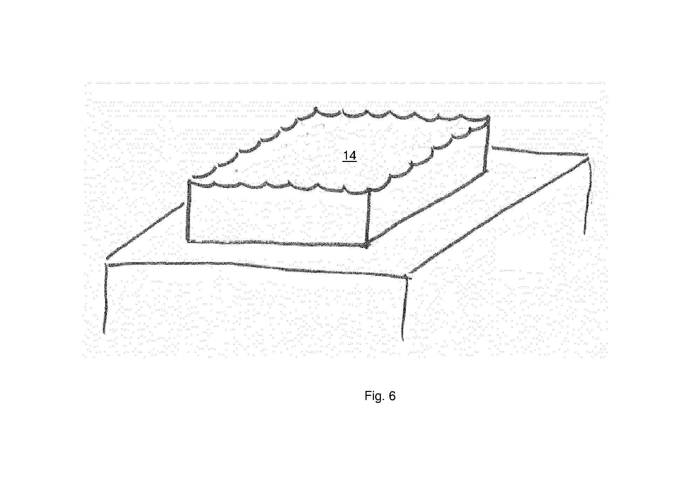

Figur 6 zeigt eine Ansicht eines Werkzeuges 14 zum Blankpressen. In dem Werkzeug 14 sind Negative der gekreuzten Zylinder eingebracht. Ein derartiges Werkzeug wird in einem konventionellen Blankpressprozess verwendet. Das obere Werkzeugteil entspricht dem unteren Werkzeugteil, wobei es um 180° gedreht wird. Somit kann ein Glasrohling zwischen den beiden Werkzeughälften zu einem Rohling für das Strahltransformationselement 1 geformt werden, wobei das Strahltransformationselement eine Einstrahlungsoberfläche 2 und eine Ausgangsstrahlungsoberfläche 6 aufweist, die symmetrisch angeordnet sind (siehe Figur 1). Das Werkzeug 14 wird durch Fräsen von sphärischen oder asphärischen Zylinderbahnen in einen Werkzeugformrohling hergestellt. Hierbei werden zunächst parallele erste Zylinderbahnen und darauffolgend Zylinderbahnen in einem Winkel zu den ersten Zylinderbahnen eingebracht. Der Winkel beträgt hierbei bevorzugt 90°. Die Orientierung der Zylinderbahnen ist hierbei generell beliebig, jedoch bevorzugt sind 90° zu einer Seite des Werkzeugformrohlings ausgebildet.

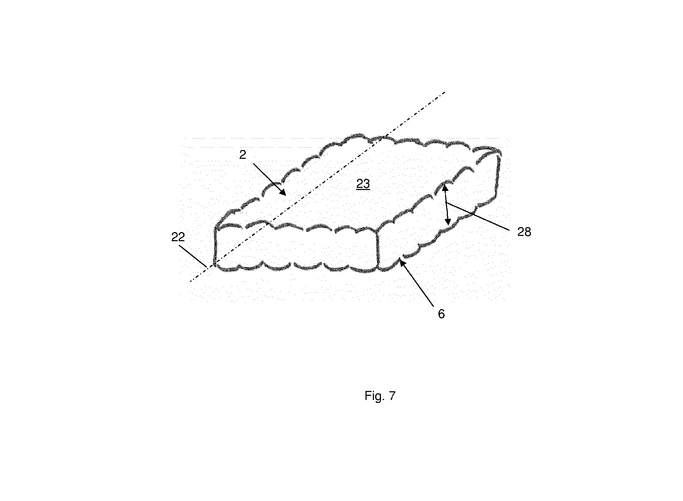

Figur 7 zeigt den mit dem Werkzeug 14 aus Figur 6 hergestellten Rohling 23 für ein Strahltransformationselement 1. Die Zylinderachsen 22 des Rohlings 23 sind im 90° Winkel zur Längsachse des Rohlings 23 bzw. parallel zur Längsseite des Rohlings 23 angeordnet. Der maximale Abstand 28 zwischen Einstrahlungsoberfläche 2 und Ausgangsstrahlungsoberfläche 6 beträgt dem Doppelten einer Brennweite der Zylindersegmente 3. Somit liegt der Brennpunkt eines Zylindersegments 3 der Einstrahlungsoberfläche auf dem Brennpunkt des gegenüber angeordneten Zylindersegments der Ausgangsstrahlungsoberfläche.

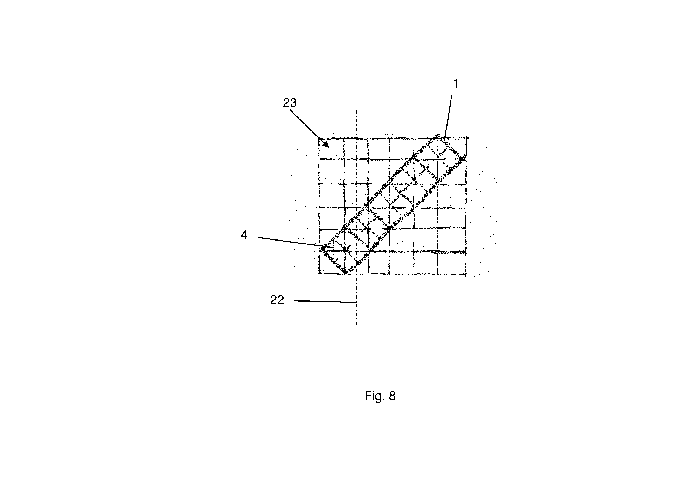

Figur 8 zeigt einen Rohling 23 aus Figur 7 in einer Draufsicht. Durch Herausschneiden eines Segments, welches im 45° Winkel zu den Zylinderachsen 22 sowie der Längsseite des Rohlings angeordnet sind, erhält man ein Strahltransformationselement 1. Das Strahltransformationselement 1 weist wie bezüglich der Figuren 1 bis 5 bereits beschrieben, Zylinderlängsachsen 4 auf, die im 45° Winkel zur Längsachse 5 des Strahltransformationselements 1 angeordnet sind.

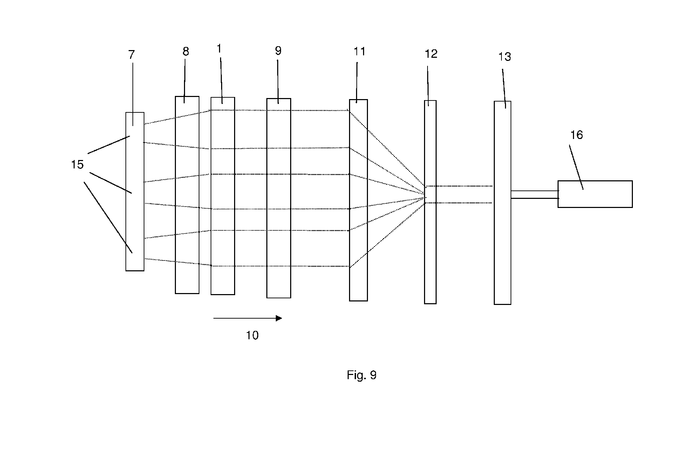

Figur 9 zeigt eine bevorzugte Anwendung einer Vorrichtung zur optischen Strahltransformation. Aus einer Laserlichtquelle 7 in Form eines Arrays von Diodenlasern wird Laserlicht aus einzelnen Emittern 15 emittiert. Das Laserlicht weist eine Slow-Axis und eine Fast-Axis auf. Durch die erste Kollimierungsvorrichtung 8 wird das emittierte Licht zunächst in der Fast-Axis kollimiert. Nach der ersten Kollimierung durchläuft die Laseremission das Strahltransformationselement 1, welches durch eine Spiegelung an den gekreuzten Zylinderlängsachsen eine Rotation der äusseren Kontur der Laseremission erzeugt. Somit wird das Strahlparameterprodukt symmetrisiert. Nach der doppelten Spiegelung im Strahltransformationselement 1 wird die Emission in einer zweiten Kollimierungsvorrichtung 9 in der Slow-Axis kolimiert. Die darauf in Ausbreitungsrichtung 10 folgende Kombinationslinse 11 kombiniert die einzelnen Emissionen zu einem Strahl.

Hierbei sind auch unterschiedliche Wellenlängen der einzelnen Emitter möglich. Das Dispersionselement 12, welches in Ausbreitungsrichtung 10 der Laseremission hinter der Kombinationslinse 11 angeordnet ist, dispergiert die auftreffende Laseremission. Nach der Dispersion im Dispersionselement 12 sind die einzelnen Laseremissionen in einem Strahl vereinigt.

Nachfolgend wird der kombinierte Strahl an einem teilweise reflektierenden Element 13 teilweise reflektiert. Durch diese Reflektion werden die einzelnen Laserdioden nur mit je einer Wellenlänge stabilisiert, sodass die Laserdioden eine stabile Ausgangsemission liefern. Der transmittierte Teil des teilweise reflektierenden Elements 13 wird darauf hin in eine Lichtleitfaser 16 eingekoppelt.

Durch die Verwendung des Strahltransformationselements 1 kann die Leistungsdichte, die in die Lichtleitfaser übertragen wird, optimiert werden und in einer Ausführungsform können die Abstände zwischen den einzelnen Laserdioden frei gewählt werden, ohne dass das Strahltransformationselement 1 gewechselt werden muss. Des Weiteren ist es möglich, die zylindrischen Elemente des Strahltransformationselements so weit zu verkleinern, dass diffraktive Elemente verwendet werden können.

## Patentansprüche

1. Strahltransformationselement (1) zum Transformieren von elektromagnetischer Strahlung, insbesondere Laserstrahlung, umfassend eine Einstrahlungsoberfläche (2) und eine Ausgangsstrahlungsoberfläche (6), wobei die Einstrahlungsoberfläche (2) mindestens vier Zylindersegmente (3) umfasst, wobei jedes Zylindersegment (3) mindestens zwei benachbarte Segmente aufweist, **dadurch gekennzeichnet, dass** eine jeweilige Zylinderlängsachse (4) eines ersten Zylindersegments (3) nicht parallel zu jeder jeweiligen Zylinderlängsachse (4) jedes benachbarten Zylindersegments (3) ausgebildet ist.

2. Strahltransformationselement (1) nach Anspruch 1, **dadurch gekennzeichnet, dass** das Strahltransformationselement (1) eine Längsachse(5) aufweist und die Zylinderlängsachsen (4) jeweils 45° zur Längsachse (5) des Strahltransformationselements (1) geneigt sind.

3. Strahltransformationselement (1) nach einem der Ansprüche 1 oder 2, **dadurch gekennzeichnet, dass** die Ausgangsstrahlungsoberfläche (6) spiegelsymmetrisch zur Einstrahlungsoberfläche (2) geformt ist, wobei der Abstand zwischen Einstrahlungsoberfläche (2) und Ausgangsstrahlungsoberfläche (6) bevorzugt dem Doppelten einer Brennweite der Zylindersegmente (3) beträgt.

4. Strahltransformationselement (1) nach einem der vorhergehenden Ansprüche, **dadurch gekennzeichnet, dass** die Zylindersegmente (3) sphärisch oder asphärisch ausgebildet sind.

5. Vorrichtung zur optischen Strahltransformation umfassend mindestens eine Laserlichtquelle sowie ein Strahltransformationselement gemäss einem der Ansprüche 1 bis 4.

6. Vorrichtung nach Anspruch 5, **dadurch gekennzeichnet, dass** die Laserlichtquelle (7) Halbleiterlaserelemente umfasst, wobei ein Abstand zwischen den Halbleiterlaserelementen entweder der Länge eines Querschnitts parallel zur Längsachse (5) des Strahltransformationselements von zwei Zylindersegmenten (3) oder von einem Zylindersegment (3) oder von weniger als einem Zylindersegment (3) entspricht.

7. Vorrichtung nach einem der Ansprüche 5 und 6, **dadurch gekennzeichnet ,dass** die Vorrichtung die folgenden Elemente umfasst, die von den Emissionen der Laserlichtquellen (7) in dieser Reihenfolge durchlaufen werden:
- eine erste Kollimierungsvorrichtung (8), um die Emission in der ersten Ebene zu kollimieren, wobei die erste Kollimierungsvorrichtung (8) bevorzugt zwischen der Laserlichtquelle (7) und dem Strahltransformationselement (1) angeordnet ist;
- eine zweite Kollimierungsvorrichtung (9), um die Emission in der zweiten Ebene zu kollimieren, wobei die zweite Kollimierungsvorrichtung (9) bevorzugt in einer Ausbreitungsrichtung (10) der Emission nach dem Strahlungstransformationselement (1) angeordnet ist.

8. Vorrichtung nach einem der Ansprüche 5 bis 7, **dadurch gekennzeichnet, dass**
- eine Kombinationslinse (11), zur Kombination der einzelnen Emissionen in einer ersten Dimension zu einem kombinierten Strahl;
- ein Dispersionselement (12) zum Empfangen und Transmittieren des kombinierten Strahls;
- sowie ein teilweise reflektierendes Element (13), welches den kombinierten Strahl teilweise auskoppelt und teilweise zurück in die Emitter reflektiert, ausgebildet ist.

9. Verfahren zur Herstellung eines Strahltransformationselements (1) gemäss einem der Ansprüche 1 bis 4 umfassend die Schritte:
- Einbringen einer doppelzylindrischen Struktur in ein optisches Glas durch ein Abformungs-/Umformungsverfahren oder einen Lithographieprozess;
- bevorzugt Heraustrennen eines Arrays aus dem optischen Glas, so dass die Zylinderlängsachse der Zylindersegmente im Wesentlichen einen 45° Winkel zur Längs- und Querseite des Arrays aufweisen.

10. Verfahren zur Transformation einer elektromagnetischen Emission, insbesondere eines oder mehrerer Laserstrahlen, wobei Emissionen auf ein Strahltransformationselement gemäss einem der Ansprüche 1 bis 4 gegeben werden, **dadurch gekennzeichnet, dass** eine Emission eines Emitters entweder durch ein oder vier oder mehr Zylindersegmente (3) transformiert wird.

11. Verfahren nach Anspruch 10, **dadurch gekennzeichnet, dass** die Emission so auf das Strahltransformationselement gegeben wird, dass wenn sie auf eine Zylinderlängsachse (5) des mindestens einen Zylindersegments (3) des Strahltransformationselements (1), die in einem Winkel von 45° zu einer Fast-axis der elektromagnetischen Emission angeordnet ist, trifft, eine Rotation der äusseren Kontur der Emission um 90° erzielt wird.

12. Verfahren nach einem der Ansprüche 10 bis 11, **dadurch gekennzeichnet, dass** die Emissionen von Emittern (15) zu einem kombinierten Strahl kombiniert werden und an einem dispersiven Element (12) dispergiert werden.

13. Verfahren nach Anspruch 12, **dadurch gekennzeichnet, dass** der kombinierte Strahl teilweise in die Emitter (15) zurückreflektiert wird.

14. Verfahren nach einem der Ansprüche 10 bis 13, **dadurch gekennzeichnet, dass** die Emissionen aus den Emittern (15) in eine Lichtleitfaser (16) eingekoppelt werden.

15. Verfahren nach einem der Ansprüche 10 bis 13, **dadurch gekennzeichnet, dass** die Emissionen in einer Richtung der Fast-axis und in einer Richtung der Slow-axis kollimiert werden und dass bevorzugt die Kollimierung der Fast-axis in einer Ausbreitungsrichtung der Emission vor der Transformation in dem Strahltransformationselement durchgeführt wird.
